# EUROPÄISCHE PATENTSCHRIFT

(11) **EP 2 509 531 B1**
(45) Veröffentlichungstag und Bekanntmachung des Hinweises auf die Patenterteilung: **18.06.2014**
(21) Anmeldenummer: 10787990.0
(22) Anmeldetag: 07.12.2010
(51) Int. Cl.: A61C 8/00, A61C 13/00, A61F 2/00, A61F 2/36

(54) **VERFAHREN ZUM HERSTELLEN VON IMPLANTATEN**
METHOD FOR PRODUCING IMPLANTS
PROCÉDÉ POUR FABRIQUER DES IMPLANTS

(30) Priorität: 11.12.2009 CH 19062009
(43) Veröffentlichungstag der Anmeldung: 17.10.2012
(73) Patentinhaber: New Dent AG, 4702 Oensingen (CH); Woodwelding AG, 6362 Stansstad (CH)
(72) Erfinder: SCHWENTER, Peter, CH-4563 Gerlafingen (CH); PERLER, Peter, CH-2562 Port (CH); STAUDENMANN, Roger, CH-3292 Busswil b. Büren (CH); MAYER, Jörg, 5702 Niederlenz (CH); MÜLLER, Andrea, 8408 Winterthur (CH); WEBER, Urs, 4600 Olten (CH)
(74) Vertreter: Frei Patent Attorneys
(86) Internationale Anmeldenummer: PCT/CH2010/000307
(87) Internationale Veröffentlichungsnummer: WO 2011/069271

(56) Entgegenhaltungen:
- WO-A1-97/33017
- WO-A1-2004/017857
- WO-A1-2008/036034

## Beschreibung

Die Erfindung liegt auf dem Gebiet der Medizinaltechnik und betrifft ein Implantat, insbesondere ein Dentalimplantat. Sie betrifft insbesondere ein Verfahren zur Herstellung hybriden Implantats mit einem beispielsweise metallischen oder keramischen Kern und mindestens einem einen Teil der Oberfläche bildenden Bauteil.

Implantate, die einen Kern sowie eine Beschichtung aus einem biokompatiblen, im Anfangszustand polymeren Material aufweisen, sind beispielsweise aus der DE 20 2004 009 060 U bekannt. Gemäss der Lehre dieser Publikation wird ein Polymerfilm mit Kleben, Schrumpfen, Lackieren Sprühen, Tauchbeschichten, etc. aufgebracht und anschliessend in einer sauerstofflosen Atmosphäre karbonisiert.

Auch aus der WO 97/33017 sind Implantate mit einem harten Kern und einer Beschichtung aus einem polymeren Material bekannt. Gemäss dieser Schrift wird PMMA in der Form von Fasern mit longitudinal orientierten Molekülketten um den Kern gewickelt, und der dadurch entstandene Mantel wird erwärmt, so dass die Fasern sich zusammenziehen und miteinander verbunden werden. Das Erwärmen kann unter gleichzeitigem Anlegen von Druck geschehen.

Implantate mit Oberflächenbereichen aus einem thermoplastischen Material und einem Kern aus einem von diesem thermoplastischen Material verschiedenen Material sind beispielsweise aus der US 7,008,226 bekannt. In solche Implantate werden bei einer bestimmungsgemässen Implantation mechanische Vibrationen eingekoppelt. Die mechanische Energie dieser Vibrationen wird im thermoplastischen Material dort, wo hohe Spannungskonzentrationen auftreten, in thermische Energie umgewandelt. Das thermoplastische Material schmilzt örtlich auf und wird durch einen bei der Implantation ausgeübten Druck in Hohlräume und/oder andere Strukturen des umgebenden Gewebes gepresst. Nach dem Ausschalten der mechanischen Schwingungen erstarrt das thermoplastische Material, und es bildet sich ein Formschluss mit den Strukturen des Gewebes.

Gezielt angebrachte Strukturen des thermoplastischen Materials, welche Orte mit hohen Spannungskonzentrationen bilden, werden oft "Energierichtungsgeber" genannt. Solche Energierichtungsgeber sind oft in der Form von Kanten, Spitzen und ähnlichen geometrischen Strukturen vorhanden. Die mechanische Bearbeitbarkeit solcher geometrischer Strukturen ist beschränkt, insbesondere bei einer fortgeschrittenen Miniaturisierung. Es stellt sich daher das Problem, wie thermoplastische Elemente mit diesen Strukturen an einem Kern aus einem anderen Material befestigt werden können.

Demnach ist eine Aufgabe der Erfindung, ein Verfahren zur Herstellung eines Implantats mit einem Kern aus einem ersten Material und mindestens einem einen Oberflächenbereich des Implantats bildenden Verankerungselement aus einem zweiten, thermoplastischen Material zur Verfügung zu stellen, welche auch dann geeignet ist, wenn das Verankerungselement feine Strukturen aufweist.

Gemäss einem Aspekt der Erfindung weist ein Verfahren zur Herstellung eines Implantats die folgenden Schritte auf:
- zur Verfügung-Stellen eines Kernelements mit einem ersten Material;
- zur Verfügung-Stellen einer Negativform des Implantats;
- Einbringen des Kernelements und mindestens eines Verankerungselements aus einem zweiten Material in die Negativform, wobei das zweite Material thermoplastisch ist,
- Verschliessen der Negativform und Beaufschlagen mit einer erhöhten Deformationstemperatur, wobei bei der Deformationstemperatur das zweite Material plastisch deformierbar, viskos oder flüssig und das erste Material fest ist,
- Abkühlen der Negativform mit dem Kernelement und dem Verankerungselement, und
- Entfernen des resultierenden Implantats aus dem Kernelement und dem Verankerungselement aus der Negativform.

Dabei bedeutet eine ,erhöhte Temperatur' eine Temperatur, die höher ist als die Zimmertemperatur und vorzugsweise auch höher als die Körpertemperatur, bei welcher das Implantat später implantiert wird, also insbesondere höher als 37°C. Die erhöhte Temperatur ist, sofern beim zweiten Material eine Glasübergangstemperatur definiert ist, vorzugsweise über der Glasübergangstemperatur. Sie kann unter der Verflüssigungstemperatur sein. Ein besonders bevorzugter Temperaturbereich ist eine Temperatur von deutlich über der Glasübergangstemperatur - beispielsweise um mindestens ein Viertel oder mindestens ein Drittel der Differenz zwischen Verflüssigungs- und Glasübergangstemperatur - die aber unter der Verflüssigungstemperatur liegt. Es kann je nach Materialzusammensetzung des zweiten Elements vorteilhaft sein, wenn die Deformationstemperatur näher bei der Verflüssigungstemperatur als bei der Glasübergangstemperatur ist.

Es kann vorteilhaft sein sein, die Materialien und die Deformationstemperatur so zu wählen, dass das Verfahren mit mindestens einem anfänglich festen und bei der Deformationstemperatur pastösen, teigartigen Verankerungselement durchgeführt wird.

Die Deformationstemperatur muss nicht konstant sein, sondern kann einen Temperaturverlauf haben; in diesem Fall gelten die vorstehenden Angaben über die erhöhte Temperatur für die maximale Temperatur.

Bevorzugt wird während dem Beaufschlagen mit der erhöhten Temperatur auch ein erhöhter Druck angesetzt, d.h. ein Druck über dem Atmosphärendruck. Beispielsweise kann die Negativform zwei oder mehr sich zur Negativform ergänzende Formteile aufweisen, die gegeneinander gepresst werden, entweder durch eine geeignete Mechanik oder indem ein oben liegendes Formteil mit einem Gewicht belegt wird; auch pneumatische, hydrostatische oder hydraulische oder andere Mittel zum Beaufschlagen des Forminnenhohlraums mit einem Druck sind denkbar.

Bei der Deformationstemperatur und unter Druck wird das Verankerungselement/werden die Verankerungselemente deformiert, wodurch auch sehr feine Energierichtungsgeber formbar sind. Gleichzeitig verbindet sich das mindestens eine Verankerungselement mit dem Kernelement. Es hat sich gezeigt, dass die resultierende Verbindung besonders innig und fest ist.

Gemäss einem Aspekt des Verfahrens wird also das verflüssigbare Material in Form mindestens eines Verankerungselements in die Negativform eingelegt und nicht beispielsweise im ursprünglich flüssigen Zustand durch Umspritzen des Kernelements angeformt. Das hat massive Vorteile, denn die Gerätschaften-Spritzgussmaschine, Spritzgussform - die für ein solches Umspritzen benötigt würden, sind bekanntlich sehr aufwändig und teuer. Ausserdem können die Aufheiz- und Abkühlphasen und gegebenenfalls eine Haltephase nach belieben gefahren werden; es gibt nicht wie bei einem Spritzgussverfahren eine vorgegebene Zykluszeit. Ein gezielt langsames Vorgehen ermöglicht auch, dass im verflüssigbaren Material keine Spannungen eingefroren werden. Das Verfahren gemäss dem Aspekt der Erfindung ermöglicht auch die Verwendung einer elastischen Form. Das hat einerseits den Vorteil, dass für ein gutes Abdichten der Form im Gegensatz zu einem Spritzgusswerkzeug keine sehr hohe Präzision der Bemessungen und Positionen von Dichtkanten vorhanden sein muss. Andererseits besteht bei der Verwendung von spröden Kernelementen - beispielsweise aus einer Keramik - eine weniger hohe Gefahr von deren Beschädigung.

Eine Form kann dann bspw. dann als "elastisch" bezeichnet werden, wenn bei den herrschenden Kräften eine im Vergleich zu den charakteristischen Dimensionen von Strukturen and er Implantatoberfläche merkliche elastische Verformung bewirkt werden kann. Insbesondere kann die elastische Verformung mindestens teilweise auf Entropie-Elastizität zurückzuführen und/oder die Negativform aus einem Elastomer oder (anderen) Kunststoff gefertigt sein.

In Ausführungsformen sind Kernelement, Verankerungselement(e) und Negativform so aufeinander abgestimmt, dass die Negativform während des Prozesses, d.h. während die Negativform das Kernelement und das/die Verankerungselement(e) umschliesst, die Negativform in direktem Kontakt mit der Kernelement-Oberfläche, beispielsweise so, dass die gemeinsame Kontaktfläche unter mechanischem Druck steht.

Auch abgesehen von der Verwendbarkeit einer elastischen Form sind die Ansprüche an die Masshaltigkeit, den Formversatz und die Exaktheit der Geometrie weit weniger hoch als beim Spritzgussverfahren; trotzdem sind auch sehr feine Strukturen im verflüssigbaren Material anformbar.

Ein weiterer möglicher Vorteil von Ausführungsformen der Erfindung ist die Materialschonung. Es reicht im Allgemeinen ein pastöser Zustand unterhalb der Verflüssigungstemperatur des verflüssigbaren Materials für die Umformung und Haftung. So kann in vielen Fällen eine Verfärbung oder gar Zersetzung des Materials vermieden werden. Das Verfahren ist einfach zu steuern. Es eignet sich für Einzelteile und Kleinserien genauso wie für grössere Serien.

In Ausführungsformen wird die Form (Negativform) während einer Haltezeit auf der Deformationstemperatur gehalten. In einigen Ausführungsformen kann ergänzend oder alternativ dazu das Abkühlen kontrolliert langsam geschehen.

Das erstes Material - das heisst das Material des Kernelements - kann eine Metall - bspw. Titan bzw. ein Titanbasierter Werkstoff - ein keramischer Werkstoff, bspw. Zirkonoxid oder ein auf Zirkonoxid basierter Werkstoff, oder auch ein ggf. verstärktes duroplastisches Polymer oder ein ggf. verstärktes thermoplastisches Polymer mit einer höheren Verflüssigungstemperatur als das zweite Material sein. Selbstverständlich ist auch denkbar, dass das Kernelement selbst ein Hybrid aus mehreren Materialien ist, d.h. der Umstand, dass das Kernelement ein erstes Material aufweist, schliesst die Präsenz weiterer Materialien nicht aus. Bspw. kann das Kernelement selbst einen metallischen Kernstift und einen Mantel auf Keramik- oder Polymerbasis aufweisen.

Das zweite Material ist beispielsweise ein Material auf Basis eines thermoplastischen Polymers. Es kann ein resorbierbares oder nicht resorbierbares thermoplastisches Polymer, gegebenenfalls mit Zusätzen sein. Spezifische Beispiele von geeigneten Materialien findet man beispielsweise in WO 2008/095 327, insbesondere auf Seiten 16-18, auf deren Lehre betreffend verwendbare verflüssigbare Materialien hier ausdrücklich Bezug genommen wird; es sind aber auch nicht in dieser Schrift genannte Materialien (einphasige Materialien oder Komposite) denkbar, welche unter Einfluss von mechanischer Energie, insbesondere mechanischen Vibrationen verflüssigbar sind und nach Absetzen des Energieeintrags wieder verfestigen.

Vorzugsweise sind zwei oder mehr Verankerungselemente vorhanden, die während des Deformations- und/oder Anhaftungsprozesses (d.h. während sie sich in der Negativform liegen und einer erhöhten Temperatur ausgesetzt sind) und danach separat bleiben, d.h. nicht ineinander fliessen. Es ist aber auch möglich, dass nur ein zusammenhängendes Verankerungselement vorhanden ist, oder dass eine Mehrzahl von ursprünglich separaten Verankerungselementen beim Deformations- und/oder Anhaftungsprozess miteinander verschweisst werden.

Das Verankerungselement bzw. die Verankerungselemente ist/sind beispielsweise in sich formstabile und dabei vorzugsweise körperhafte, kompakte Elemente.

Das Implantat - bzw. ein enossaler Bereich davon, weist in bevorzugten Ausführungsformen Oberflächenbereiche aus dem ersten Material und Oberflächenbereiche aus dem zweiten Material aus, welche z.B. beide so angeordnet sind, dass sie beide nach der Implantation in Kontakt mit Knochgewebe kommen. Beispielsweise kann eine Mehrzahl von auch nach Abschluss des Herstellungsverfahrens nicht zusammenhängenden Verankerungselementen vorhanden sein. Insbesondere kann vorgesehen sein, dass die Verankerungselemente den Kern nicht mantelartig umschliessen. Wenn eine Implantat/Implantationsachse definiert ist (wie bspw. bei einem Dentalimplantat oder einem anderen bereichsweise stiftartigen Implantat) sind die Verankerungselemente in Ausführungsformen insbesondere so angeordnet, dass in mindestens einer Ebene senkrecht zur Implantationsachse entlang einer Umfanglinie sowohl Oberflächenbereiche aus dem ersten Material als auch Oberflächenbereiche aus dem zweiten Material vorhanden sind.

Das Kernelement weist mindestens eine Vertiefung - beispielsweise pro Verankerungselement eine Vertiefung - auf, in welche das entsprechende Verankerungselement eingelegt wird und in welcher das Verankerungselement so verankert wird, dass es über eine äussere Kontur des Kernelements hinausragt. Die Vertiefung kann an ihrem Grund eine definiert, beispielsweise ebene Auflage für das Verankerungselement bilden. Sie kann die Form eines Langlochs, einer Rechtecktasche, einer Kreistasche, einer Polygontasche, einer elliptischen Tasche, einer eine dieser Formen annähernden Tasche oder irgend eine andere Form haben. Zudem können die Vertiefungen auch Hinterschneidungen aufweisen um zusätzlich das Verankerungselement mit dem Kernelement durch einen geometrischen Formschluss zu verbinden.

Die Kontaktfläche zwischen dem Kernelement und dem Verankerungselement bzw. den Verankerungselementen - also bspw. der Grund der Vertiefung - kann zur Verbesserung der Adhäsion vorgängig zum Deformations- und/oder Anhaftungsprozesses behandelt werden. Dies kann beispielsweise mit Sandstrahlen, Kugelstrahlen, Ätzen, Lasern oder anderen oberflächenmodifizierenden, abtragenden und/oder auch auftragenden Verfahren geschehen. Das Verankerungselement und/oder je - nach Zusammensetzung auch das Kernelement kann/können zur Haftverbesserung durch Plasma und/oder durch einen Primer aktiviert werden.

Die verwendete Negativform weist mindestens zwei Formteile auf, die so zueinander positionierbar sind, dass sich ein Innenhohlraum der gewünschten Implantatform ergibt. An den Formteilen können Positionierhilfen vorhanden sein, die beim Zusammenführen der Formteile so ineinander eingreifen, dass die relative Position definiert ist. Ein Druck kann insbesondere in Ausführungsformen mit Positionierhilfe in Form einer gerichteten Kraft ausgeübt werden - die Formteile werden gegeneinander gedrückt. Ein Beispiel für eine solche gerichtete Kraft ist die Gewichtskraft.

Die Negativform ist vorzugsweise mindestens im Bereich der Grenzfläche zwischen Formteilen elastisch und kann beispielsweise ganz aus einem elastischen Material bestehen. Die Negativform kann ausserdem im Vergleich zu einer Spritzgussform vergleichsweise weich sein, mit einer Härte von beispielsweise zwischen 20 Shore OO und 100 Shore D, insbesondere zwischen 10 Shore A und 80 Shore D, zwischen 10 und 100 Shore A, oder zwischen 10 und 60 Shore A, besonders bevorzugt zwischen 15 und 40 Shore A. Als Materialien für die Negativform kommen unter anderem Silikone, aber auch andere elastische Materialien, welche der Deformationstemperatur ohne weiteres standhalten, in Frage, beispielsweise Polyurethan, Nitrilkautschuk, etc.

Nachfolgend werden Ausführungsbeispiele der Erfindung anhand von Figuren näher erläutert. Die Figuren sind nicht massstäblich. In den Figuren bezeichnen gleiche Bezugszeichen gleiche oder analoge Elemente. Es zeigen:
- Figur 1 eine Darstellung eines Kernelements;
- Figur 2 eine Darstellung eines Verankerungselements vor dem Deformations- und/oder Anhaftungsprozess;
- Figur 3 eine Explosionsdarstellung des Kernelements, zweier Verankerungselemente und einer Negativform zur Durchführung des Verfahrens vor dem Deformations- und/oder Anhaftungsprozess;
- Figur 4 die Negativform im verschlossenen Zustand und unter Druck; und
- Figur 5 das Implantat nach dem Prozess.

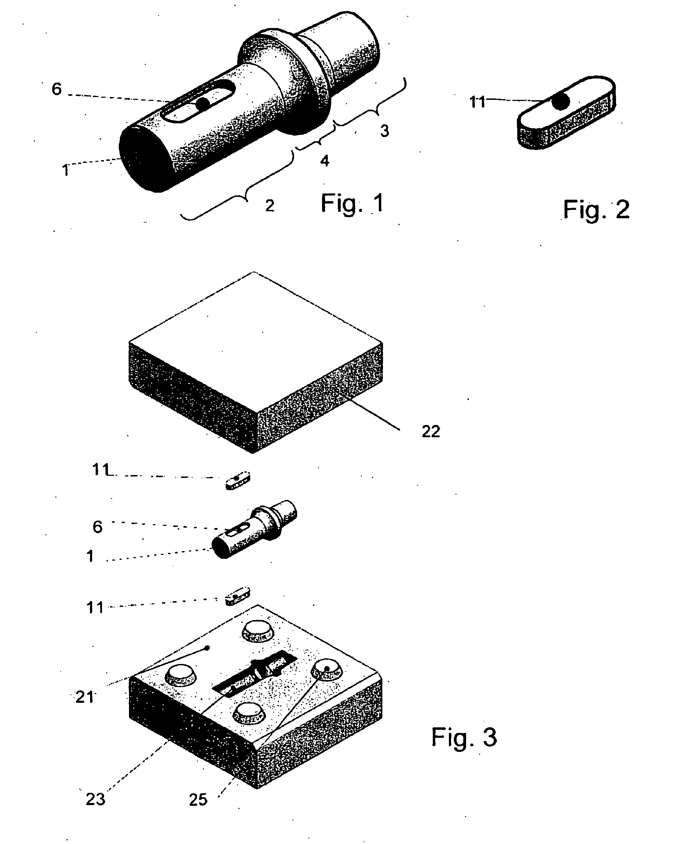

Das Kernelement 1 gemäss Figur 1 zur Bildung eines Dentalimplantats weist in an sich bekannter Art eine Verankerungspartie 2, die im implantierten Zustand im Knochen verankert wird und eine mit diesem einstückigen Aufbaupartie 3 zur Befestigung einer Krone oder eines anderen Elementes. Im Übergangsbereich ist eine Aufweitung 4 ausgebildet, welche beispielsweise eine nach der Implantation auf das Zahnfleisch abgestützte und abdichtende Schulter bilden kann. Die Fachperson wird ohne weiteres erkennen, dass die Lehre der vorliegenden Erfindung ohne weiteres auf andere Implantatformen für Dentalimplantate - darunter auch Implantatformen für zweiteilige Systeme mit einem separaten Abutment - und auf weitere, nicht dentale, Implantate anwendbar ist, die mittels mechanischer Energie und unter mindestens teilweiser Verflüssigung eines verflüssigbaren Materials des Implantats implantierbar sind.

Das Kernelement ist beispielsweise aus einem Titanwerkstoff oder einem keramischen Werkstoff, beispielsweise auf Zirkonoxidbasis, gefertigt.

Im Bereich der Verankerungspartie 2 ist sind zwei langlochartige Vertiefungen 6 vorhanden (in der Figur ist nur eine der Vertiefungen sichtbar; die zweite Vertiefung befindet sich im auf der Figur nicht sichtbaren Bereich, der ersten Vertiefung gegenüberliegend). Der Grund dieser Vertiefung ist aufgeraut. Auch der restliche enossale Oberflächenbereich (d.h. der Oberflächenbereich der Verankerungspartie, der im implantierten Zustand von Knochengewebe umgeben ist) kann mindestens bereichsweise aufgeraut sein, wobei die Rauhigkeit dieses restlichen Oberflächenbereichs für die Zwecke der Osseointegration optimiert ist; die mittlere Rautiefe in diesem restlichen Oberflächenbereich beträgt bspw. zwischen 1 µm und 10 µm, die maximale Rautiefe bspw. zwischen 3 µm und 15 µm.

Das Verankerungselement 11 gemäss **Figur 2** hat im abgebildeten ursprünglichen Zustand eine an die Form des Langlochs 6 angepasste Form mit einer Dicke, welche grösser ist als die Tiefe des Langlochs. Spezifische Strukturen wie Energierichtungsgeber oder ähnlich müssen nicht vorhanden sein.

Das Verankerungselement 11 ist beispielsweise aus einem resorbierbaren oder nicht resorbierbaren (ggf. mit Zusätzen) thermoplastischen Polymer gefertigt, beispielsweise aus einem Polylactid (PLA) oder aus Polymethylmethacrylat (PMMA).

In **Figur 3** sieht man zusätzlich zum Kernelement 1 und zwei Verankerungselementen 11 der vorstehend beschriebenen Art auch die zweiteilige Negativform. Die zwei Formteile 21, 22 bilden, entlang einer Trennebene getrennt, zusammen die Negativform. Die Negativform ist aus einem elastischen Material gefertigt, beispielsweise einem Silikonwerkstoff. Durch das Zusammenbringen der beiden Teile 21, 22 der Negativform entsteht im Innern ein Hohlraum 23 der Form des herzustellenden Implantats mit sämtlichen Strukturen, also insbesondere auch mit den Energierichtungsgebem. Die Formteile 21, 22 können noch Formzentriermittel (Positionierhilfen) aufweisen, durch die ihre relative Position genau definierbar ist. Die Positionierhilfen haben hier die Form von konischen Positionierzapfen 25 des ersten Formteils, welche beim Zusammenfügen in entsprechende Vertiefungen (nicht gezeichnet) des zweiten Formteils eingreifen.

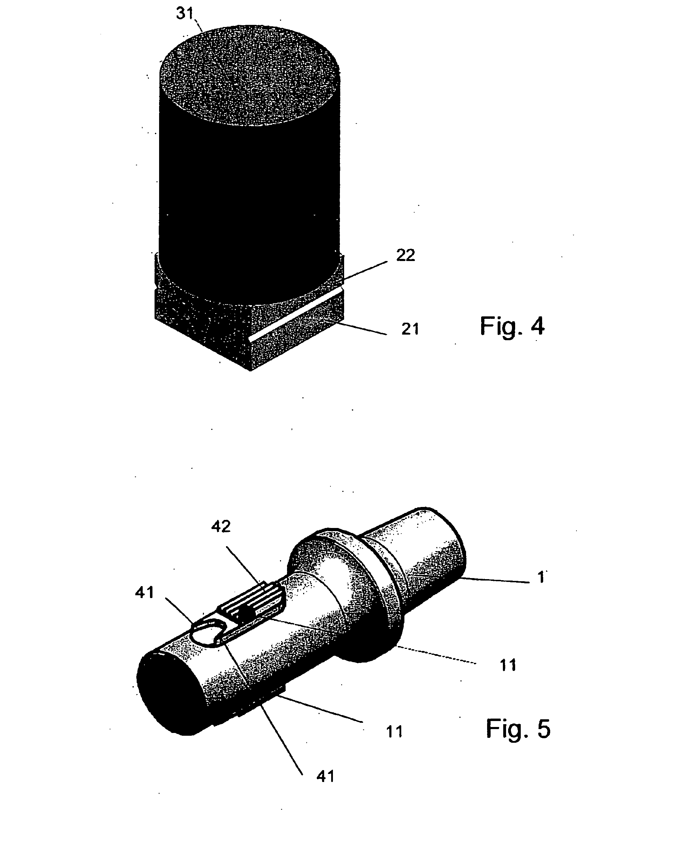

Zum Durchführen des Deformations- und/oder Anhaftungsprozesses werden das Kernelement und die Verankerungselemente in der bestimmungsgemässen Position und Orientierung - wie in Figur 3 gezeichnet - in die Negativform eingelegt und diese wird einer erhöhten Deformationstemperatur ausgesetzt, beispielsweise in einem Ofen mit regelbarer Temperatur Zusätzlich wird vorteilhaft ein Druck angelegt, mit dem die leicht elastischen Formteile gegeneinander gepresst werden. In der in **Figur 4** dargestellten Ausführungsform geschieht das mittels eines Gewichts 31. Es sind.jedoch auch andere Mechanismen denkbar, mit denen ein Druck angelegt wird, bspw. ein hydrostatischer, hydraulischer oder pneumatischer Druck.

Anschliessend wird die Negativform im immer noch zusammengefügten Zustand und vorzugsweise immer noch unter Druck langsam abgekühlt. Das kann geschehen, indem die Ofentemperatur kontrolliert reduziert wird, oder auch indem die Form aus dem Ofen entfernt wird und bei Umgebungstemperatur -bspw. Zimmertemperatur-langsam auskühlen kann.

Dann wird das entstandene Implantat entformt, indem die beiden Formteile voneinander gelöst werden.

Das entstandene Implantat sieht man in **Figur 5****.** Im dargestellten Ausführungsbeispiel deutlich sichtbar sind die nun vorhandenen Strukturen des in der Figur oben liegenden, fest am Kernelement 1 anhaftenden Verankerungselements 11. Man sieht Energierichtungsgeber in der Form von zwei nach distal ragenden Spitzen 41 und proximal davon axial verlaufenden Rippen 42.

### Beispiel 1:

Zur Herstellung der Verankerungselemente wird das resorbierbare Polylactid LR706 von Boehringer Ingelheim vorgepresst in Platten verwendet. Das Resomer LR706 ist ein Gemisch aus L-lactide und R-Polymer., die Glasübergangstemperatur beträgt 50°-60°, die Verflüssigungstemperatur liegt zwischen 170°C und 210°C.

Aus dem Plattenmaterial werden auf einer handelsüblichen Fräsmaschine Streifen mit entsprechendem Aussenmass (siehe bspw. Fig. 2) herausgefräst. Diese Streifen dienen als Verankerungselemente.

Zur Herstellung einer Negativform wird unter Verwendung eines Computer Aided Design (CAD-) Systems eine positive Giessform modelliert welche dann durch Stereolithographie Schicht für Schicht aufgebaut wird. Die so entstehende positive Giessform wird mit dem Zweikomponenten-Silikon Dublosil von Simed (oft in der Zahntechnik als Dubliermasse verwendet) ausgegossen. Nach der vollständigen Vernetzung werden zwei Silikonblöcke mit der jeweiligen Negativform gewonnen, die auch die negativen bzw.. positiven Formzentriermittel (Positionierhilfen) aufweisen. Die Shore-Härte der beiden Formteile beträgt zwischen 24 und 26 shore A.

Das Kernelement besteht aus Titan Grade4 mit sandgestrahlter Oberfläche mit Durchmesser 4 mm und einer enossalen Länge von 10 mm. Zusätzlich ist der Implantatkörper mit zwei Langlöchern von 1.5 mm Breite, 5 mm Länge und einer Tiefe von 0.5 mm versehen (vgl. Fig. 1).

Das erste Verankerungselement wird auf den Implantatkörper (d.h. das Kernelement) aufgelegt und zusammen mit diesem in die vorgesehene Formhälfte gegeben. Der zweite Streifen wird anschliessend auf die Oberseite des Kernelements gelegt und mit der zweiten Formhälfte verschlossen. Als Gewicht wird ein 500 Gramm schwerer Stahlzylinder verwendet.

Das ganze Paket wird in einem Wärmeschrank mit Konvektion während 30 min auf 130 Grad erhitzt und anschliessend ausserhalb des Ofens aber immer noch mit dem Gewicht während 20 min an der Luft abgekühlt.

Es ergibt sich ein Implantat mit den gewünschten Energierichtungsgebern und einer ausgezeichneten, innigen Verbindung zwischen dem Kernelement und den Verankerungselementen.

### Beispiel 2:

Es wird ein Kernelement wie in Beispiel 1 verwendet. Im Unterschied zum Beispiel 1 werden die Verankerungselemente aus Acrylglas XT (PMMA; Glasübergangstemperatur ca. 115°C) hergestellt. Die Negativform wird aus Silikon Elite double 32 von Zhermack mit einer Härte von 32 Shore A gefertigt.

Die Verankerungselemente werden zusammen mit dem Kernelement in die vorgesehene Negativform gegeben und diese wird verschlossen. Als Gewicht wird ein 500 Gramm schwerer Stahlzylinder verwendet.

Das ganze Paket wird in einem Wärmeschrank mit Konvektion während 20 min auf 140 Grad erhitzt und anschliessend ausserhalb des Ofens aber immer noch mit dem Gewicht während 20 min an der Luft abgekühlt.

Es ergibt sich ebenfalls ein Implantat mit den gewünschten Energierichtungsgebern und einer innigen Verbindung zwischen dem Kernelement und den Verankerungselementen.

### Beispiel 3:

Wie Beispiel 1, aber als Kernelement wird ein Kernelement aus Zirkonoxid (mit Anteilen von weniger als 10% Yttriumoxid) verwendet. Konkret wird ein Yttriumstabilisiertes, tetragonales, teilkristallines Zirkondioxid eingesetzt. Dabei erfüllt die verwendete Zirkondioxid Keramik die Norm ISO 13356:2008 zu "Implants for Surgery - Ceramic Materials based on yttria-stabilized tetragonal zirconia (Y-TZP)".

Die Verbindung zwischen dem Kernelement und den Verankerungselementen ist ebenfalls gut. Aufgrund der Elastizität der Form ist die Gefahr einer mechanischen Beschädigung des Kernelementes beim Prozess gering.

Viele weitere Ausführungsformen sind denkbar. So kann beispielsweise eine Negativform eine Mehrzahl von nebeneinander oder arrayartig oder sonstwie regelmässig oder unregelmässig angeordneten Innenhohlräume für je ein Kernelement mit der zugehörigen Anzahl von Verankerungselementen vorhanden sein.

## Patentansprüche

1. Verfahren zur Herstellung eines Implantats mit folgenden Schritten:
- zur Verfügung-Stellen eines Kernelements (1) mit einem ersten Material;
- zur Verfügung-Stellen einer Negativform (21, 22) des Implantats;
- Positionieren des Kernelements (1) und mindestens eines Verankerungselements (11) aus einem zweiten Material in der Negativform(21, 22), wobei das zweite Material thermoplastisch ist,
- Verschliessen der Negativform (21, 22) so, dass ein Forminnenhohlraum mit dem Kernelement (1) und dem mindestens einen Verankerungselement (11) gebildet wird und Beaufschlagen mit einer erhöhten Deformationstemperatur, wobei bei der Deformationstemperatur das zweite Material plastisch deformierbar, viskos oder flüssig und das erste Material fest ist,
- Abkühlen der Negativform (21, 22) mit dem Kernelement (1) und dem Verankerungselement (11), und
- Entfernen des resultierenden Implantats, aufweisend das Kernelement (1) und daran befestigt das Verankerungselement (11), aus der Negativform (21, 22), **dadurch gekennzeichnet, dass**
- das Kernelement (1) mindestens eine Vertiefung (6) mit oder ohne Hinterschneidung aufweist, wobei die mindestens eine Vertiefung (6) und das mindestens eine Verankerungselement (11) in ihrer Form und Anzahl aufeinander abgestimmt sind und beim Einbringen des Kernelements (1) und des mindestens einen Verankerungselements oder vor diesem Einbringen das mindestens eine Verankerungselement (11) in der mindestens einen Vertiefung (6) positioniert wird.

2. Verfahren nach Anspruch 1, wobei das Verankerungselement (11) beim Einbringen in die Negativform (21, 22) fest ist.

3. Verfahren nach Anspruch 1 oder 2, wobei die Deformationstemperatur höher als 37°C ist.

4. Verfahren nach einem der vorangehenden Ansprüche, wobei die Deformationstemperatur *T_{D}* zwischen einer Glasübergangstemperatur *T_{G}* und einer Verflüssigungstemperatur *T_{M}* des zweiten Materials ist, wobei beispielsweise i für die Deformationstemperatur *T_{D}* gilt: *T_{G}*+1/4*(*T_{M}*-*T_{G}*)< *T_{D}<T_{M}*.

5. Verfahren nach einem der vorangehenden Ansprüche, wobei das Verankerungselement (11) bei der Deformationstemperatur pastös aber nicht flüssig ist.

6. Verfahren nach einem der vorangehenden Ansprüche, wobei mindestens während des Beaufschlagens mit der Deformationstemperatur der durch das Kernelement (1) und das mindestens eine Verankerungselement (11) gefüllte Forminnenhohlraum mit einem Druck beaufschlagt wird.

7. Verfahren nach einem der vorangehenden Ansprüche, **dadurch gekennzeichnet, dass** während des Beaufschlagens mit einer erhöhten Deformationstemperatur die Negativform bereichsweise in direktem Kontakt mit der Kernelement-Oberfläche steht.

8. Verfahren nach einem der vorangehenden Ansprüche, **dadurch gekennzeichnet, dass** die Negativform (21, 22) mindestens zwei mindestens bereichsweise elastische Formteile aufweist, zwischen denen der Forminnenhohlraum bildbar ist.

9. Verfahren nach Anspruch 8, **dadurch gekennzeichnet, dass** die Formteile mindestens im Bereich einer Grenzfläche zwischen den Formteilen eine Härte von zwischen 15 und 60 Shore A aufweisen.

10. Verfahren nach einem der vorangehenden Ansprüche, **dadurch gekennzeichnet, dass** die Negativform (21, 22) mit dem Kernelement (1) und dem mindestens einen Verankerungselement (11) während einer Haltezeit von zwischen 5 Minuten und 1 Stunde auf der Deformationstemperatur gehalten wird.

11. Verfahren nach einem der vorangehenden Ansprüche, **dadurch gekennzeichnet, dass** zusätzlich zum Kernelement (1) eine Mehrzahl von Verankerungselementen (11) in den Forminnenhohlraum eingebracht werden, welche Verankerungselemente (11) auch nach dem Entfernen des Implantats aus dem Kernelement voneinander separat sind.

12. Verfahren nach einem der vorangehenden Ansprüche, **dadurch gekennzeichnet, dass** das Kernelement (1) mindestens im Bereich einer Berührungsfläche mit dem Verankerungselement (11) aufgeraut und/oder mit makroskopischen Strukturen versehen ist.

13. Verfahren nach einem der vorangehenden Ansprüche, **dadurch gekennzeichnet, dass** eine Oberfläche des Verankerungselements mittels Plasma oder einem Primer aktiviert ist.

14. Verfahren nach einem der vorangehenden Ansprüche, **dadurch gekennzeichnet, dass** der Forminnenhohlraum im Bereich des mindestens einen Verankerungselementes eine Struktur hat, welche von einer Form des mindestens einen Verankerungselements im Urzustand verschieden ist und welche mindestens einen Energierichtungsgeber (41, 42) des Verankerungselements am resultierenden Implantat definiert.

## Claims

1. A method for **manufacturing** an implant, comprising the following steps:
- providing a core element (1) having a first material;
- providing a negative mold (21, 22) of the implant;
- positioning the core element (1) and at least one anchoring element (11) made of a second material in the negative mold (21, 22), with the second material being thermoplastic,
- sealing the negative mold (21, 22) such that a mold internal cavity with the core element (1) and the at least one anchoring element (11) is formed and applying an elevated deformation temperature, wherein, at the deformation temperature, the second material is plastically deformable, viscous or liquid and the first material is solid,
- cooling the negative mold (21, 22) with the core element (1) and the anchoring element (11), and
- removing the resulting implant, which **comprises** the core element (1) and, attached thereto, the anchoring element (11), from the negative mold (21, 22),
**characterized in that**
- the core element (1) comprises at least one recess (6) with or without an undercut, wherein the at least one recess (6) and the at least one anchoring element (11) are matched to one another in terms of their shape and number and the at least one anchoring element (11) is positioned in the at least one recess (6) during the introduction of the core element (1) and the at least one anchoring element (11) or prior to this introduction.

2. The method as claimed in claim 1, wherein the anchoring element (11) is solid during the introduction into the negative mold (21, 22).

3. The method as claimed in claim 1 or 2, wherein the deformation temperature is greater than 37°C.

4. The method as claimed in one of the preceding claims, wherein the deformation temperature *T_{D}* lies between a glass transition temperature. *T_{G}* and a liquefaction temperature. *T_{M}* of the second material with, for example,
the following holding true for the deformation temperature *T_{D}*: *T_{G}*+1/*4**(*T_{M} T_{G}*) < *T_{D}* < *T_{M}*.

5. The method as claimed in one of the preceding claims, wherein the anchoring element (11) is pasty but not liquid at the deformation temperature.

6. The method as claimed in one of the preceding claims, wherein a pressure is applied to the mold internal cavity, which is filled by the core element (1) and the at least one anchoring element (11), at least during the application of the deformation temperature.

7. The method as claimed in one of the preceding claims, **characterized in that**, in regions, the negative mold is in direct contact with the core-element surface during the application of an elevated deformation temperature.

8. The method as claimed in one of the preceding claims, **characterized in that** the negative mold (21, 22) has at least two mold parts which are at least partly elastic, wherein the mold interior cavity is formable between said parts.

9. The method as claimed in claim 8, **characterized in that** the mold parts have a Shore A hardness of between 15 and 60, at least in the region of a boundary between the mold parts

10. The method as claimed in one of the preceding claims, **characterized in that** the negative mold (21, 22) with the core element (1) and the at least one anchoring element (11) is held at the deformation temperature during a holding time of between 5 minutes and 1 hour.

11. The method as claimed in one of the preceding claims, **characterized in that**, in addition to the core element (1), plurality of anchoring elements (11) arc introduced into the mold internal cavity, which anchoring elements (11) are separate from one another even after removing the implant from the core element.

12. The method as claimed in one of the preceding claims, **characterized in that** the core element (1) is roughened and/or provided with macroscopic structures, at least in the region of a contact face with the anchoring element (11).

13. The method as claimed in one of the preceding claims, **characterized in that** a surface of the anchoring element is activated by means of plasma or a primer.

14. The method as claimed in one of the preceding claims, **characterized in that** the mold internal cavity has a structure in the region of the at least one anchoring element, which structure differs from a shape or the at least one anchoring element in the initial state and which structure defines at least one energy **director** (41, 42) of the anchoring element on the resulting implant.

## Revendications

1. Procédé de fabrication d'un implant, le procécé présentant les étapes suivantes :
préparation d'un élément d'âme (1) à l'aide d'un premier matériau,
préparation d'un moule négatif (21, 22) de l'implant,
placement dans le moule négatif (21, 22) de l'élément d'âme (1) et d'au moins un élément d'ancrage (11) en un deuxième matériau, le deuxième matériau étant thermoplastique,
fermeture du moule négatif (21, 22) de manière à former une cavité interne de moule qui présente l'élément d'âme (1) et le ou les éléments d'ancrage (11) et application d'une haute température de déformation, le deuxième matériau étant déformable plastiquement, visqueux ou liquide à la température de déformation et le premier matériau restant solide,
refroidissement du moule négatif (21, 22) qui présente l'élément d'âme (1) et l'élément d'ancrage (11) et
enlèvement de l'implant ainsi obtenu, qui présente l'élément d'âme (1) et l'élément d'ancrage (11) qui y est fixé hors du moule négatif (21, 22),
caractérisé on ce que
l'élément d'âme (1) présente au moins un creux (6) avec ou sans contre-dépouille,
en ce que le ou les creux (6) et le ou les éléments d'ancrage (11) sont accordés mutuellement par leur forme et leur nombre et
en ce que le ou les éléments d'ancrage (11) étant placés dans le ou les creux (6) lors du placement de l'élément d'âme (1) et du ou des éléments d'ancrage ou avant ce placement.

2. Procédé selon la revendication 1, dans lequel l'élément d'ancrage (11) est solide lors de son placement dans le moule négatif (21, 22).

3. Procédé selon les revendications 1 ou 2, dans lequel la température de déformation est supérieure à 37°C.

4. Procédé selon l'une des revendications précédentes, dan lequel la température de déformation est *T_{D}* est située entre la température de transition vitreuse *T_{G}* et la température de liquéfaction *T_{M}* du deuxième matériau, avec par exemple pour la température de déformation *T_{D}* : *T_{D}* + *1*/*4**(*T_{M}* - *T_{G})* < *T_{D}* < *T_{M}.*

5. Procédé selon l'une des revendications précédentes, dans lequel à la température de déformation, l'élément d'ancrage (11) est pâteux mais non liquide.

6. Procédé selon l'une des revendications précédentes, dans lequel au moins pendant que la température de déformation est appliquée, la cavité intérieure du moule remplie par l'élément d'âme (1) et le ou les éléments d'ancrage (11) est sollicitée par une pression.

7. Procédé selon l'une des revendications précédentes, **caractérisé en ce que** pendant que la température accrue de déformation est appliquée, certaines parties du moule négatif sont en contact direct avec la surface de l'élément d'âme.

8. Procédé selon l'une des revendications précédentes, **caractérisé en ce que** le moule négatif (21, 22) présente au moins deux parties de moule dont au moins certaines parties entre lesquelles la cavité intérieure du moule peut être formée sont élastiques.

9. Procédé selon la revendication 8, **caractérisé en ce qu'**au moins au niveau d'une surface frontière entre les parties du moule, les parties du moule présentent une dureté comprise entre 15 et 60 Shore A.

10. Procédé selon l'une des revendications précédentes, **caractérisé en ce que** le moule négatif (21, 22) qui présente l'élément d'âme (1) et le ou les éléments d'ancrage (11) est maintenu à la température de déformation pendant une durée comprise entre 5 minutes et 1 heure.

11. Procédé selon l'une des revendications précédentes, **caractérisé en ce qu'**en plus de l'élément d'âme (1), plusieurs éléments d'ancrage (11) sont placés dans la cavité intérieure du moule, ces éléments d'ancrage (11) étant séparés les uns des autres après l'enlèvement de l'implant hors de l'élément d'âme.

12. Procédé selon l'une des revendications précédentes, **caractérisé en ce que** l'élément d'âme (1) est rendu rugueux au moins au niveau de sa surface de contact avec l'élément d'ancrage (11) et/ou y est dotée de structures macroscopiques.

13. Procédé selon l'une des revendications précédentes, **caractérisé en ce qu'**une surface de l'élément d'ancrage est activée au moyen d'un plasma ou d'une couche de fond.

14. Procédé selon l'une des revendications précédentes, **caractérisé en ce que** la cavité intérieure du moule présente au niveau du ou des éléments d'ancrage une structure qui diffère à l'état initial de la forme du ou des éléments d'ancrage et qui définit au moins un dispositif (41, 42) d'orientation d'énergie de l'élément d'ancrage sur l'implant ainsi obtenu.
